# EUROPÄISCHE PATENTANMELDUNG

(11) **EP 0 947 471 A1**
(43) Veröffentlichungstag der Anmeldung: **06.10.1999**
(21) Anmeldenummer: 98103729.4
(22) Anmeldetag: 03.03.1998
(51) Int. Cl.: C02F 1/00, C02F 3/20, B01F 3/04

(54) **Belüftungsvorrichtung für Wasser und Verfahren zur Herstellung einer Belüftungsvorrichtung**

(71) Anmelder: Huber + Suhner AG Kabel-, Kautschuk-, Kunststoffwerke, CH-8330 Pfäffikon (CH)
(72) Erfinder: Cantz, Thomas, 8712 Stäfa (CH)
(74) Vertreter: Hepp, Dieter

(57) **Zusammenfassung**

Eine Belüftungsvorrichtung für Abwasser (1) besteht im wesentlichen aus einem Träger (2) mit einer flachen, im wesentlichen rechteckigen Oberfläche (3) und aus einer luftdurchlässigen Membran (6), welche mit dem Träger (2) verbunden ist. Zwischen der Membran (6) und dem Träger (2) wird eine Luftkammer (7a, 7b) gebildet. Die rechteckige, flache Bauweise erlaubt einerseits eine modulare Konstruktion der Belüftungsvorrichtung (1) und erlaubt ausserdem die Herstellung der Belüftungsvorrichtung im Koextrusionsverfahren.

## Beschreibung

Die Erfindung betrifft eine Belüftungsvorrichtung für Wasser, insbesondere Abwasser und ein verfahren zur Herstellung einer Belüftungsvorrichtung mit den Merkmalen des Oberbegriffs der unabhängigen Patentansprüche.

Zur Belüftung von Abwasser in Kläranlagen sind eine Vielzahl von verschiedenen Belüftungsanordnungen bekannt. Es werden beispielsweise rohrförmige Belüfter eingesetzt, welche von einer Membran umgeben sind, durch die Luftbläschen in das zu belüftende Abwasser austreten können. Solche Rohrbelüfter werden oft auch als Linienbelüfter bezeichnet, weil die Belüfter in einer Linie im Klärbecken angeordnet werden können.

Alternativ sind sogenannte Belüftungsteller bekannt. Solche Teller bestehen im allgemeinen aus einer runden Stützplatte, durch welche Luft zugeführt wird und aus einer am Rand der Stützplatte befestigten, porösen Membran. Solche Tellerbelüfter werden einzeln auf eine im Klärbecken verlegte Luftzuführleitung aufgesetzt.

Weiter sind etwa rechteckförmige Plattenbelüfter bekannt, die eine kissenartig in einem Rahmen befestigte Membran aufweisen, und die beispielsweise unter einem Gitternetz am Boden des Klärbeckens befestigt sind.

Diese verschiedenen bekannten Belüftungsanordnungen sind alle mit Nachteilen behaftet. So ist die Herstellung von Rohrbelüftern verhältnismässig aufwendig, weil eine Membran um den rohrförmigen Grundkörper montiert werden muss. Ausserdem besteht bei solchen Rohrbelüftern aufgrund ihrer gekrümmten Oberfläche das Problem der Koaleszenz (Vereinigung der austretenden Luftblasen).
Tellerbelüfter sind aufwendig in ihrer Herstellung und insbesondere in der Montage.
Ausserdem müssen Belüfter aufgrund von Materialalterung von Zeit zu Zeit ausgewechselt werden. Bei Tellerbelüftern muss jeder einzelne Teller abmontiert und ersetzt werden. Dies führt zu einem aufwendigen Unterhalt. Plattenbelüfter sind ausserdem kompliziert in der Herstellung und ebenfalls aufwendig im Unterhalt.

Es ist deshalb eine Aufgabe der vorliegenden Erfindung die Nachteile des Bekannten zu vermeiden, insbesondere also eine Belüftungsvorrichtung für Wasser, insbesondere Abwasser zu schaffen, welche einfach und wirtschaftlich herstellbar ist, welche ohne grossen Aufwand montierbar oder austauschbar ist und die eine gute Verteilung der Luftbläschen gewährleistet. Eine weitere Aufgabe besteht darin, eine Belüftungsvorrichtung mit einzelnen, standardisierten Baumodulen zu schaffen. Eine weitere Aufgabe der vorliegenden Erfindung besteht darin, ein einfaches Verfahren zum Herstellen einer solchen Belüftungsvorrichtung zu schaffen.
Statt zur Abwasserbelüftung lässt sich die Erfindung auch zur Belüftung von stehenden Wassern, wie z.B. Naturteichen oder Zierteichen einsetzen.
Erfindungsgemäss werden diese Aufgaben mit einer Belüftungsvorrichtung und mit einem Verfahren gemäss den Merkmalen des kennzeichnenden Teils der unabhängigen Patentansprüche gelöst.

Die Belüftungsvorrichtung gemäss den Merkmalen der vorliegenden Erfindung besteht im wesentlichen aus einem Träger mit einer flachen oder gekrümmten, im wesentlichen rechteckförmigen Oberfläche mit Längs- und Querseiten. Das Verhältnis von Länge zu Breite von wenigstens 3, vorzugsweise wenigstens 15:1 erlauben optimale rationelle Herstellung als Extrusionsteile.

Die rechteckige Oberfläche gewährleistet einen homogenen Austritt der Gasbläschen und erlaubt auch modulare Bauteile mit einer variablen Länge herzustellen. Anders als bei Tellerbelüftern kann mit einer Belüftungsvorrichtung gemäss der vorliegenden Erfindung eine freiwählbare Länge in einem Klärbecken mit einer einzelnen Belüftungsvorrichtung bestückt werden.

Vorteilhaft beträgt das Verhältnis der Länge von Längs- und Querseiten etwa 15 zu 1 bis 30 zu 1. Am Träger, insbesondere an dessen Oberfläche ist eine luftdurchlässige Membran angebracht, welche vorzugsweise wenigstens teilweise entlang der Längsseiten der Oberfläche mit dem Träger verbunden ist. Die Membran und der Träger umschliessen wenigsten eine Luftkammer. Eine Luftzufuhranordnung zum Füllen der Luftkammer mit Luft ist vorgesehen. Sobald Luft unter Druck in die Luftkammern eingeführt wird, wölbt sich die Membran, die Poren der Membran öffnen sich und die Luft kann in das zu belüftende Abwasser austreten.

Eine solche Belüftungsvorrichtung kann vorzugsweise durch Koextrusion eines Trägers und einer Membran hergestellt werden. Der Träger besteht im allgemeinen aus einem relativ rigiden Material und die Membran muss eine ausreichende Festigkeit und Elaszitität aufweisen. Durch Koextrusion können im selben Herstellungsverfahren der Träger und die Membran hergestellt und gleichzeitig dauerhaft miteinander verbunden werden.
Selbstverständlich kann ein Koextrusionsverfahren auch für Belüftungsvorrichtungen verwendet werden, welche einen Träger mit einer nicht flachen Oberfläche aufweisen. Die Einfachheit des Herstellungsverfahrens kommt in diesem Fall genau so zum Tragen.

In einem bevorzugten Ausführungsbeispiel ist die Membran entlang einer zu den Längsseiten der Oberfläche des Trägers im wesentlichen parallel verlaufenden Mittellinie mit der Oberfläche des Trägers verbunden. Auf diese Weise umschliessen die Membran und die Träger zwei Luftkammern. Die Verteilung der Gasbläschen wird verbessert, weil die Krümmung der Oberfläche der einzelnen Luftkammern geringer wird.

In einem weiteren bevorzugten Ausführungsbeispiel sind die Luftkammern der Belüftungsvorrichtung entlang wenigstens einer Querseite mit einer Luftzufuhreinrichtung verbindbar.

Die Verbindung mit einer Luftzufuhr an einer Querseite vereinfacht den Aufbau des Trägers, weil im Gegensatz zu Tellerbelüftern keine Luftzufuhr im Träger selbst notwendig ist. Damit wird ein Koextrusionsverfahren besonders einfach durchführbar.

Vorteilhaft ist ausserdem der Träger mit Befestigungsmittel zum lösbaren und form- und kraftschlüssigen Verbinden der Belüftungsvorrichtung in einer Haltevorrichtung versehen. Das lösbare und form- kraftschlüssige Verbinden der Belüftungsvorrichtung in der Haltevorrichtung hat insbesondere für die Wartung, d.h. für den Austausch von Belüftungsvorrichtungen vorteilhafte Wirkungen. Dank der lösbaren Verbindung kann die Belüftungsvorrichtung einfach aus der Haltevorrichtung ausgehoben und aus dem Klärbecken entfernt werden, ohne dass das Klärbecken geleert werden muss.

Die Befestigungsmittel sind vorteilhaft auf der der Oberfläche des Trägers abgewandte Unterseite angeordnet.

Die Belüftungsvorrichtung kann ausserdem Hohlräume aufweisen, welche mit einem Beschwerungsmedium auffüllbar sind. Die Hohlräume zwischen Träger und Membran der Belüftungsvorrichtung und in der Luftzufuhr erzeugen einen Auftrieb, welcher normalerweise eine feste Verankerung der Belüftungsvorrichtung erfordert. Aufgrund der Hohlräume zur Aufnahme eines Beschwerungsmaterials kann dieser Auftrieb im wesentlich kompensiert werden. Die Notwendigkeit einer stabilen Verankerung entfällt deshalb. Weil keine stabile Verankerung erforderlich ist, ist die Lösbarkeit der Belüftungsvorrichtung aus der Haltevorrichtung besonders einfach zu bewerkstelligen.

In einem weiteren Ausführungsbeispiel sind die Hohlräume in den Befestigungsmitteln der Belüftungsvorichtung angebracht. Die Befestigungsmittel können insbesondere als im wesentlichen zylindrisches Rohr ausgebildet sein, welches entlang eines Umfangabschnittes in eine Haltevorrichtung einschnappbar ist und welches zur Aufnahme eines Beschwerungsmediums ausgebildet ist. Eine Belüftungsvorrichtung mit einem flachen Träger und Befestigungsmitteln mit einem im wesentlichen runden Querschnitt sind besonders einfach extrudierbar.

In einem weiteren, bevorzugten Ausführungsbeispiel ist die Belüftungsvorrichtung ausserdem mit Mitteln zum Entwässern der Luftkammern versehen. Es ist möglich, dass während Betriebsunterbrechungen Wasser in die Luftkammern eintritt. Deshalb ist es vorteilhaft, wenn die Entwässerungsmittel selbsttätig funktionieren, d.h. evtl. enthaltenes Wasser in den Luftkammern sofort ausstossen.

Der Träger kann aus Polypropylen und die Membran aus einem thermoplastischen Elastomer gefertigt sein. Durch Koextrusion können diese beiden Materialien einfach miteinander verbunden werden und die für Träger und Membran unterschiedlichen mechanischen Eigenschaften sind gewährleistet.

Die Belüftungsvorrichtung wird vorteilhaft durch Koextrusion hergestellt. Dabei werden ein Träger und die Membran aus je einem einzelnen Rohmaterial gemeinsam extrudiert und durch die Extrusion miteinander verbunden.

Auf diese Weise wird eine besonders innige Verbindung in einem einfachen Herstellungsverfahren ermöglicht.

In einem vorteilhaften Ausführungsbeispiel des erfindungsgemässen Verfahrens wird die Membran anschliessend einem Verfahren zur Erhöhung ihrer Luftdurchlässigkeit, insbesondere einer Perforation unterzogen.

Das Koextrusionsverfahren ist insbesondere im Hinblick auf modulare Bauteile interessant.
Bei einem Koextrusionsverfahren können einfache Bauteile mit verschiedenen Längen hergestellt werden.

Der Vorteil modularer Bauteile kann aber auch ganz allgemein mit Belüftungsvorrichtungen erzielt werden, die aus einem extrudierten Kunststoffhohlprofil bestehen. Das Verhältnis von Höhe zu Breite sollte in diesem Fall wenigstens 1:3 betragen. Es handelt sich hier also um verhältnismässig schmale Belüfter. Das Profil kann aus einem einzelnen Material bestehen, dass zur Erzeugung einer gasdurchlässigen Oberfläche perforiert wurde. In einem solchen Fall ist wenigstens ein Mittelsteg im Hohlraum zur Erhöhung der Stabilität vorteilhaft. Es ist aber auch denkbar, ein solches Profil aus zwei Materialien herzustellen, welche unterschiedliche, mechanische Festigkeiten aufweisen (fester Unterteil/felxibler Oberteil).

Die Erfindung wird im folgenden in Ausführungsbeispielen und anhand der Zeichnungen näher erläutert.

Es zeigen:
- Figur 1: Eine schematische perspektivische Darstellung einer erfindungsgemässen Belüftungsvorrichtung,
- Figur 2: Schematische Darstellung eines alternativen Ausführungsbeispiel im Querschnitt,
- Figur 3: Querschnitt durch eine erfindungsgemässe Belüftungsvorrichtung,
- Figur 4: Schematische Darstellung einer erfindungsgemässen Belüftungsvorrichtung in einer Haltevorrichtung,
- Figur 5: Schematische Darstellung einer erfindungsgemässen Belüftungsvorrichtung mit einer Luftzufuhr,
- Figur 6: Schematische Darstellung von Mitteln zum Entwässern der Luftkammern.

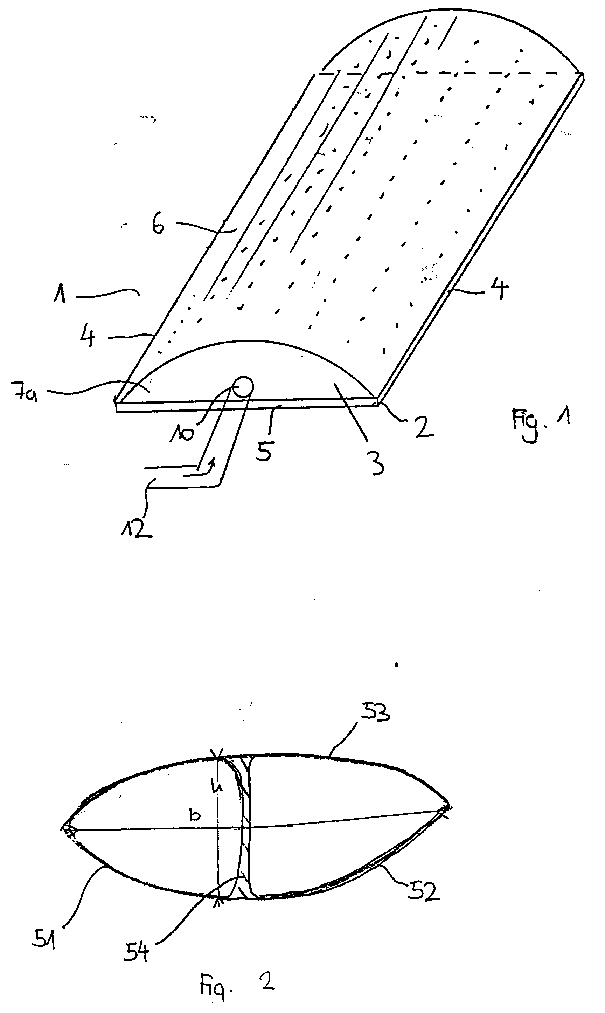

In Figur 1 ist schematisch eine erfindungsgemässe Belüftungsvorrichtung 1 gezeigt. Die Belüftungsvorrichtung 1 besteht im wesentlichen aus einem Träger 2 mit einer flachen Oberfläche 3 und mit Längsseiten 4 und Querseiten 5. Entlang der Längsseiten 4 ist eine Membran 6 mit dem Träger 2 verbunden. Die Membran 6 und der Träger 2 umschliessen eine Luftkammer 7a. Die Membran 6 kann entlang der Querseiten 5 ebenfalls mit dem Träger 2 direkt verbunden sein, oder es können aber spezielle Anschlussstücke verwendet werden. Auf der einen Seite ist die Luftkammer 7a entlang der Querseite 5 abgeschlossen und auf der anderen Seite ist ein Luftanschluss 10 vorgesehen, welcher über eine Verbindungsleitung 12 mit einer nicht näher dargestellten Luftleitung 11 verbunden ist. Die Membran 6 ist mit einer Perforation versehen, welche den Austritt von Luftbläschen in das zu klärende Abwasser erlaubt.

In einem Klärbecken 30 sind mehrere Belüftungsvorrichtungen 1 angeordnet. Die Belüftungsvorrichtungen 1 sind in modularer Bauweise in Modulen verschiedener Länge ausgeführt. Diese Bauweise ermöglicht ein individuelles Bestücken des Klärbeckens 30 mit Belüftungsvorrichtungen 1. Die Belüftungsvorrichtungen 1 sind lösbar auf je zwei Haltevorrichtungen 16 form- und kraftschlüssig gehalten, was ein leichtes Montieren und Entfernen der Belüftungsvorrichtung 1 ermöglicht. Jede der Belüftungsvorrichtungen 1 ist über einen flexiblen Luftzuführschlauch 12 mit einer Luftleitung 11 verbunden.

Figur 2 zeigt ein alternatives Ausführungsbeispiel einer Belüftungsvorrichtung 51 im Querschnitt. Die Belüftungsanordnung 51 weist eine im wesentlichen gasundurchlässige Unterseite 52 und eine gasdurchlässige Oberseite 53 auf und ist als Kunststoff-Hohlprofil ausgebildet. Ein Mittelsteg 54 dient zur Erhöhung der Stabilität. Das Verhältnis zwischen Höhe h und Breite b beträgt etwa 1:3, kann aber auch grösser sein.

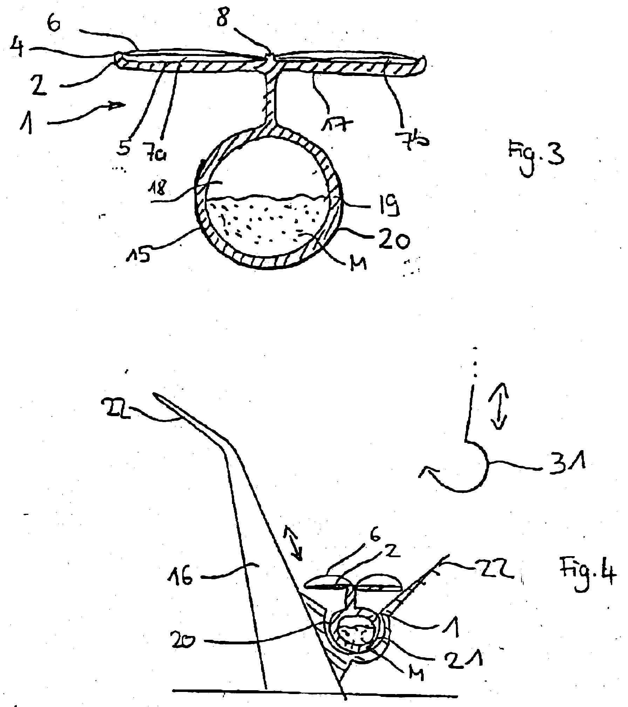

Figur 3 zeigt das Profil einer erfindungsgemässen Belüftungsvorrichtung 1 im Querschnitt. Die Belüftungsvorrichtung 1 besteht aus einem im wesentlichen T-förmigen Träger 2 und einer auf der Oberfläche 4 des Trägers 2 angebrachten Membran 6. Auf der Unterseite 17 des Trägers sind Befestigungsmittel 15 angeordnet, welche in der Form eines Rohres 19 ausgebildet sind. Die Membran 6 ist entlang der Längsseiten 4 mit dem Träger 2 verbunden. Zwischen der Membran 6 und dem Träger 2 sind zwei Luftkammern 7a und 7b eingeschlossen. Die Membran 6 ist zweiteilig ausgebildet und entlang einer Mittellinie 8, welche parallel zu den Längsseiten 4 verläuft mit dem Träger 2 verbunden. Die Ausbildung von zwei Luftkammern 7a, 7b führt zu einer symmetrischen Konstruktion und vermeidet Koaleszenz (Vereinigung von Blasen).

Die Befestigungsmittel 15 sind mit einem Hohlraum 18 versehen, der zur Aufnahme eines Beschwerungsmediums M dient. Das Beschwerungsmedium M dient zur Kompensation des Auftriebs der Luftkammer 7a, 7b zwischen Träger 2 und Membran 6 in Wasser.

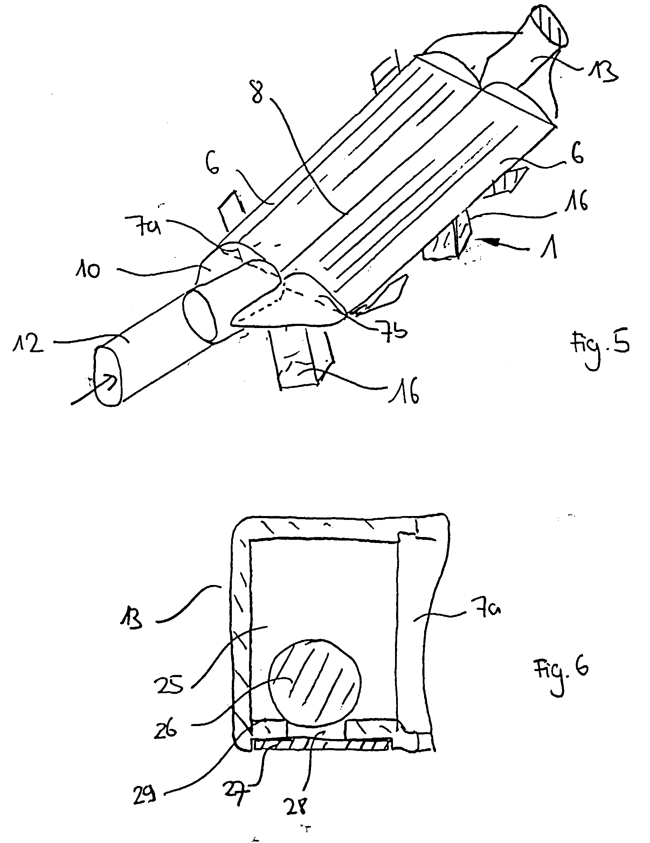

Figur 4 zeigt schematisch eine Haltevorrichtung 16, in welcher eine erfindungsgemässe Belüftungsvorrichtung 1 gehalten wird. Die Haltevorrichtung ist höhenverstellbar ausgebildet, was ein einfaches Nivellieren der Belüftungsvorrichtung 1 erlaubt. Die Belüftungsvorrichtung ist entlang eines Umfangabschnittes 20 des Rohres 19 (siehe Figur 3) in eine Aufnahmeöffnung 21 der Haltevorrichtung 16 eingeschnappt. Einführhilfen 22 sind vorgesehen, welche das Einsetzen der Belüftungsvorrichtung 1 in die Haltevorrichtung 16 erleichtern. Schematisch ist in Figur 4 eine Hebevorrichtung 31 dargestellt, mittels welcher die Befestigungsvorrichtung 1 unterfasst, aus der Haltevorrichtung 16 ausgeschnappt und aus dem Klärbecken gehoben werden kann.

Figur 5 zeigt schematisch eine erfindungsgemässe Belüftungsvorrichtung 1, welche auf zwei Haltevorrichtungen 16 montiert ist. Die Belüftungsvorrichtung 1 weist zwei Luftkammern 7a und 7b auf. Die Luftkammern sind auf der einen Seite durch ein Endstück 13 abgeschlossen und auf der anderen Seite durch einen Luftanschluss 10 und über eine flexible Verbindungsleitung 12 mit einer Luftzufuhr verbunden. Dank dieser Konstruktion kann die Belüftungsvorrichtung 1 als Extrusionsprofil in beliebiger Länge hergestellt werden. Die Luftzufuhr erfolgt auf der Stirnseite der Belüftungsvorrichtung 1.

In Figur 6 ist eine Vorrichtung zum Entwässern der Luftkammern 7a und 7b vorgesehen. Im Endstück 13 kann eine gegen unten gerichtete Öffnung 28 vorgesehen sein, welche mit einem Spanngummi 27 verschlossen ist. Eine Kugel 26, welche leichter ist als Wasser, ist von der Innenseite des Endstücks 13 in die Öffnung 28 plaziert. Sobald Wasser aus den Luftkammern 7a in das Endstück 13 eintritt und die Luftzufuhr unterbrochen wird, wird die Kugel 26 angehoben, und das Wasser kann durch die Öffnung 28 nach unten austreten. Sobald die Luftzufuhr wieder eingeschaltet wird, wird das Wasser durch die Öffnung hinausgepresst.

Sobald kein Wasser mehr in den Entwässerungsmitteln 25 vorhanden ist, senkt sich die Kugel 26 erneut auf die Öffnung 28 und die Öffnung 28 wird geschlossen. Der Boden 29 der Entwässerungsmittel 25 ist vorteilhaft tiefer angeordnet als die Oberfläche 3 des Trägers 2, sodass allfällig in die

Luftkammern 7a eintretendes Wasser automatisch in die Entwässerungsmittel 25 fliesst.

Der Träger 2 ist vorzugsweise aus Polypropylen gefertigt. Die Membran kann aus einem thermoplastischen Elastomer wie beispielsweise Santoprene gefertigt werden. Die einzelnen Module der Belüftungsvorrichtung 1 weisen typischerweise eine Länge von 1 bis 8 Metern auf. Die Dicke der Membran 6 beträgt zwischen 1 und 3mm, die Dicke des Trägers 2 ca. 4 bis 6mm. Die Luftkammern sind je ca. 50 bis 150mm breit, was zu einer Totalbreite bei zwei Luftkammern 7a, 7b von 10 bis 300mm führt. Als Beschwerungsmedium M wird vorzugsweise Sand verwendet. Es sind aber auch andere Materialien wie Kies, Steine, Beton etc. denkbar.

## Patentansprüche

1. Belüftungsvorrichtung (1) für Wasser, insbesondere Abwasser, gekennzeichnet durch einen Träger (2), mit einer, im wesentlichen rechteckigen Oberfläche (3), mit Längs- und Querseiten (4,5) wobei die Längsseite (4) wenigstens 3 mal, vorzugsweise wenigstens 15 mal grösser ist als die Querseite (5) und durch wenigstens eine luftdurchlässige Membran (6), welche vorzugsweise entlang der Längsseite (4) der Oberfläche (3) mit dem Träger (2) verbunden ist, wobei die Membran (6) und der Träger (2) wenigstens eine Luftkammer (7a,7b) umgrenzen, wobei Träger (2) und Membran (6) vorzugsweise symmetrisch ausgebildet sind und wobei die Symmetrieebene die Membranoberfläche halbiert.

2. Belüftungsvorrichtung (1) insbesondere nach Anspruch 1 mit einem Träger (2) und einer auf der Oberfläche (3) des Trägers befestigten, luftdurchlässigen Membran, wobei die Membran (6) und der Träger (2) wenigstens eine Luftkammer (7a, 7b) umschliesst, dadurch gekennzeichnet, dass der Träger und die Membran extrudiert, vorzugsweise koextrudiert sind.

3. Belüftungsvorrichtung nach einem der Ansprüche 1 oder 2, dadurch gekennzeichnet, dass die Membran entlang einer zu den Längsseiten (4) der Oberfläche (3) im wesentlichen parallel verlaufenden Mittellinie (8) derart mit der Oberfläche (3) des Trägers (2) verbunden ist, dass die Membran (6) und der Träger (2) zwei Luftkammern (7a,7b) umschliessen.

4. Belüftungsvorrichtungen nach einem der Ansprüche 1 bis 3, dadurch gekennzeichnet, dass die Belüftungsvorrichtung (1) entlang wenigstens einer Querseite (5) mit einer Luftzufuhreinrichtung (10,11,12) verbindbar ist.

5. Belüftungsvorrichtung nach einem der Ansprüche 1 bis 4, dadurch gekennzeichnet, dass der Träger (2) mit Befestigungsmitteln (15) zum lösbaren und form - und kraftschlüssigen Verbinden der Belüftungsvorrichtungen (1) in einer Haltevorrichtung (16) versehen ist.

6. Belüftungsvorrichtungen nach Anspruch 5, dadurch gekennzeichnet, dass die Befestigungsmittel (15) auf der der Oberfläche (3) abgewandten Unterseite (17) des Trägers (2) angeordnet sind.

7. Belüftungsvorrichtung nach einem der Ansprüche 1 bis 6, dadurch gekennzeichnet, dass die Belüftungsvorrichtung (1) Hohlräume (18) aufweist, welche mit einem Beschwerungmedium (M) auffüllbar sind.

8. Belüftungsvorrichtung nach einem der Ansprüche 5 oder 6 und Anspruch 7, dadurch gekennzeichnet, dass die Hohlräume (18) in den Befestigungsmitteln (15) angebracht sind.

9. Belüftungsvorrichtung nach einem der Ansprüche 4 bis 7, dadurch gekennzeichnet, dass die Befestigungsmittel (15) als im wesentlichen zylindrisches Rohr (19) ausgebildet sind, welches entlang eines Umfangabschnittes (20) in eine Haltevorrichtung (16) einschnappbar ist, und welches zur Aufnahme des Beschwerungsmediums (M) ausgebildet ist.

10. Belüftungsvorrichtung nach einem der Ansprüche 1 bis 9, dadurch gekennzeichnet, dass die Belüftungsvorrichtung (1) mit Mitteln (15) zum Entwässern der Luftkammern (7a, 7b) versehen ist.

11. Belüftungsvorrichtung nach einem der Ansprüche 1 bis 10, dadurch gekennzeichnet, dass der Träger (2) aus Polypropylen und die Membran (6) aus einem thermoplastischen Elastomer besteht.

12. Verfahren zur Herstellung einer Belüftungsvorrichtung (1), insbesondere nach einem der Ansprüche 1 bis 11, mit einem Träger (2) und einer auf der Oberflächen (3) des Trägers (2) befestigten Membran, insbesondere nach einem der Ansprüche 1-11, dadurch gekennzeichnet, dass die Membran (6) und der Träger (2) im Koextrusionsverfahren gleichzeitig hergestellt und miteinander verbunden werden.

13. Verfahren zur Herstellung einer Belüftungsvorrichtung nach Anspruch 12, dadurch gekennzeichnet, dass die Membran (6) anschliessend einem Verfahren zur Erhöhung ihrer Luftdurchlässigkeit, insbesondere einer Perforation unterzogen wird.

14. Belüftungsvorrichtung (51) für Wasser, insbesondere Abwasser, dadurch gekennzeichnet, dass die Belüftungsvorrichtung im wesentlichen aus einem Abschnitt eines extrudierten Kunststoff-Hohlprofils besteht, welches eine gasdurchlässige Oberseite (53) und eine im wesentlichen gasundurchlässige Unterseite (52) aufweist, wobei das Hohlprofil ein Verhältnis von Höhe (h) zu Breite (b) des Innenraums von höchstens 1:3 aufweist.

15. Belüftungsvorrichtung (1) nach Anspruch 14 dadurch gekennzeichnet, dass das Hohlprofil Verstärkungsmittel, insbesondere einen Mittelsteg aufweist.
